# EUROPEAN PATENT APPLICATION

(11) **EP 3 335 850 A1**
(43) Date of publication of application: **20.06.2018**
(21) Application number: 17207539.2
(22) Date of filing: 15.12.2017
(51) Int. Cl.: B29C 37/00, B44C 1/17

(54) **METHOD FOR MANUFACTURING A RUBBER PRODUCT**

(30) Priority: 16.12.2016 CN 201611164536
(71) Applicant: Remys International Limited, Apia (WS)
(72) Inventor: Chang, Yi-Sheng, Taipei City 114 (TW)
(74) Representative: Becker Kurig Straus

(57) **Abstract**

A method for manufacturing a rubber product (8) includes printing a printing layer (7) with a pattern or a color on a plate member (5); processing a rubber material (3) in mixing, heating and pressing manners; molding the rubber material (3) and the plate member (5) together by heating and pressing to transfer the printing layer (7) from the plate member (5) onto the rubber material (3), so as to form the rubber product (8); demolding the rubber product (8); and detaching the plate member (5) from the rubber product (8) when demolding the rubber product (8). The pattern or the color is printed to at least one three-dimensional surface (81, 82) of the rubber product (8) by transferring the printing layer (7) from the plate member (5) onto the rubber material (3).

## Description

### Field of the Invention

The present invention relates to a method for manufacturing a rubber product according to the pre-characterizing clauses of claims 1 and 6.

### Background of the Invention

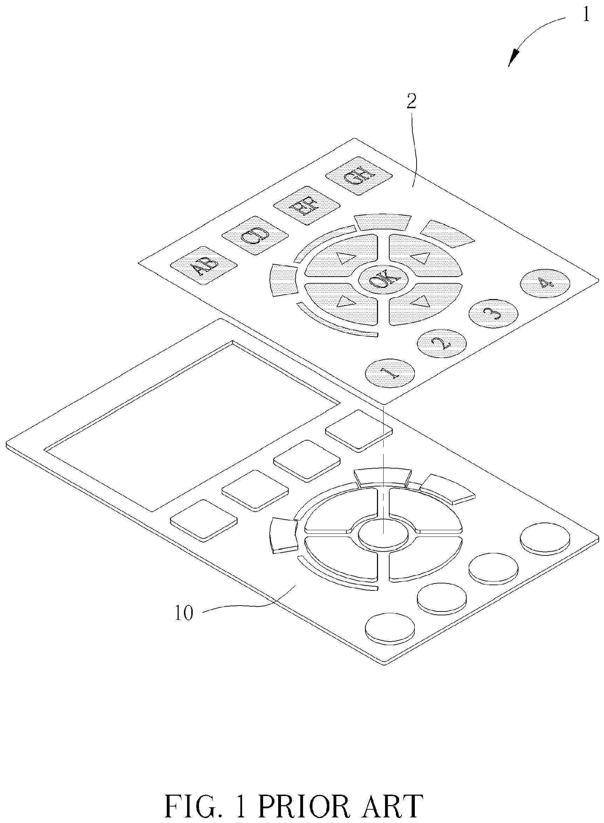

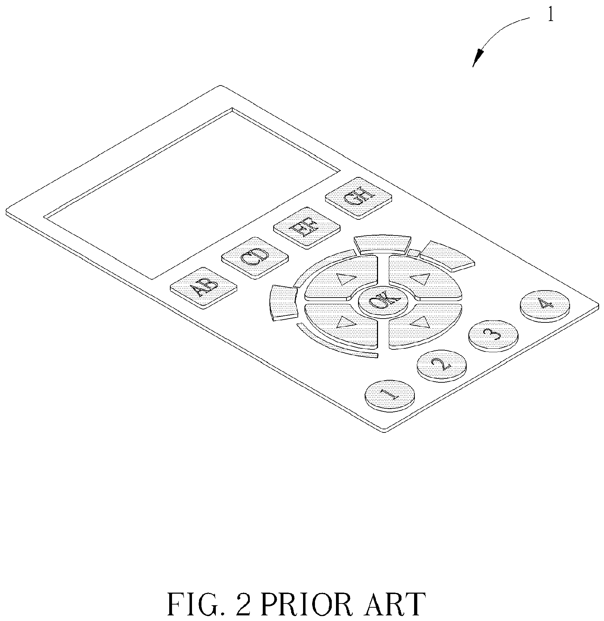

Please refer to FIG. 1 and FIG. 2. FIG. 1 is a diagram of a rubber product 1 during a printing process in the prior art. FIG. 2 is a schematic diagram of the rubber product 1 in the prior art. As shown in FIG. 1 and FIG. 2, the rubber product 1 can be made of a rubber material 10 and adapted to form buttons of an electronic device or an appliance, such as a remote control for a television. However, it is not limited thereto. Since the rubber material is too soft to be printed, the rubber material should be further vulcanized by heating and pressing to improve elasticity and strength. In other words, when the rubber material is molded and vulcanized by heating and pressing, a surface of the rubber material can be hardened and a shape of the rubber material can be fixed, which makes the rubber material printable. Furthermore, as shown in FIG. 1, the rubber material 10 is usually printed by a screen 2 in the prior art.

However, screen printing only allows one color to be printed at a time. That is, a second color layer cannot be printed unless a first color layer is printed and then dried. Therefore, when it is required to print the rubber material with multiple colors, it takes multiple printing and drying processes. During multiple printing and drying processes, the rubber material may expand and contract repeatedly because of change of temperature, which reduces quality of the rubber product. Moreover, it must be printed manually and carefully layer by layer, which increases manufacturing cost and affects manufacturing automation. Therefore, there is a need to provide a method for manufacturing a rubber product to satisfy practical demands and reduce manufacturing cost.

### Summary of the Invention

This is mind, the present invention aims at providing a method for manufacturing a rubber product capable of enhancing printing quality and reducing manufacturing cost.

This is achieved by a method for manufacturing a rubber product according to claims 1 and 6. The dependent claims pertain to corresponding further developments and improvements.

As will be seen more clearly from the detail description following below, the claimed method for manufacturing a rubber product includes printing a printing layer with a pattern or a color on a plate member; processing a rubber material in mixing, heating and pressing manners; molding the rubber material and the plate member together by heating and pressing to transfer the printing layer from the plate member onto the rubber material, so as to form the rubber product; demolding the rubber product; and detaching the plate member from the rubber product when demolding the rubber product. The pattern or the color is printed to at least one three-dimensional surface of the rubber product by transferring the printing layer from the plate member onto the rubber material.

Furthermore, another claimed method for manufacturing a rubber product includes printing a printing layer with a pattern or a color on a plate member; processing a rubber material in mixing, heating and pressing manners; molding the rubber material and the plate member together by heating and pressing to transfer the printing layer from the plate member onto the rubber material and to combine the plate member with the rubber material, so as to form the rubber product; and demolding the rubber product. The pattern or the color is printed to at least one three-dimensional surface of the rubber product by transferring the printing layer from the plate member onto the rubber material.

The present invention utilizes the printing layer on the plate member for printing the pattern or the color onto at least one three-dimensional surface of the rubber product. The plate member can be selectively detached from the rubber product to emphasize aesthetic appearance or combined with the rubber product to improve the durability of the rubber product, such as to increase chemical resistance or wear resistance. Therefore, the present invention provides enhanced usability and manufacturability.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a diagram of a rubber product during a printing process in the prior art,
FIG. 2 is a schematic diagram of the rubber product in the prior art,
FIG. 3 is a schematic diagram of a rubber product according to an embodiment of the present invention,
FIG. 4 is an enlarged diagram of the rubber product shown in FIG. 3 according to the embodiment of the present invention,
FIG. 5 is a partial diagram of a rubber material, a plate member and a mold according to the embodiment of the present invention,
FIG. 6 is a diagram of a button of the rubber product according to the embodiment of the present invention,
FIG. 7 is a diagram of the rubber material during a molding process according to the embodiment of the present invention, and
FIG. 8 is a flow chart diagram of a method for manufacturing the rubber product according to the embodiment of the present invention.

### Detailed Description

In the following detailed description of the preferred embodiments, reference is made to the accompanying drawings which form a part hereof, and in which is shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive.

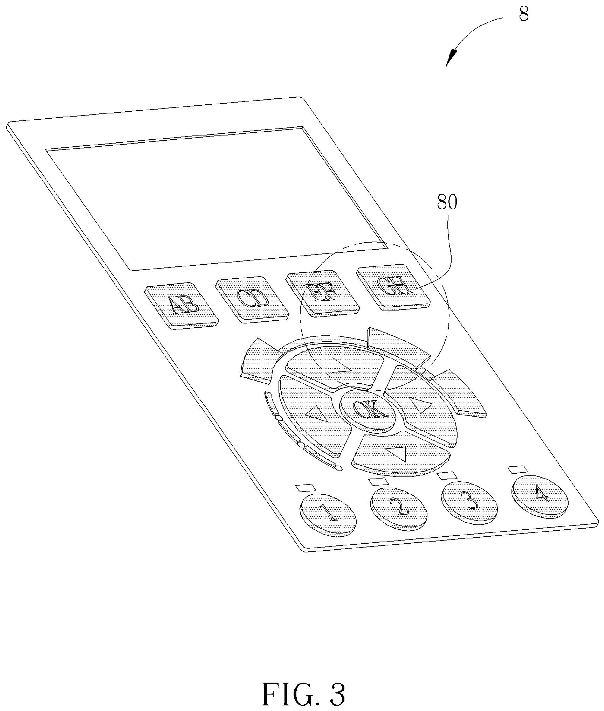

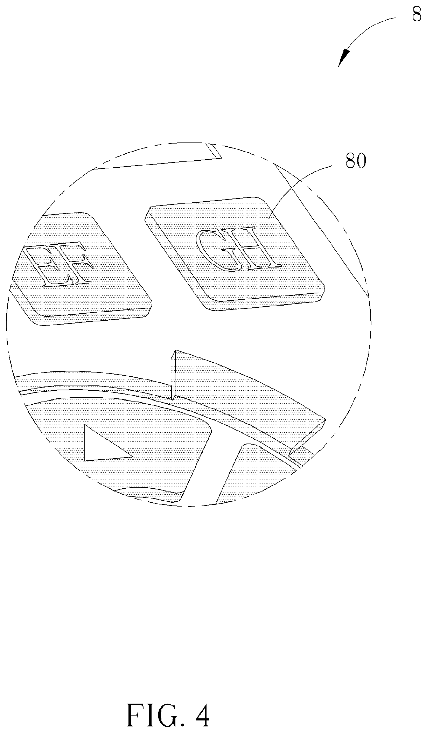

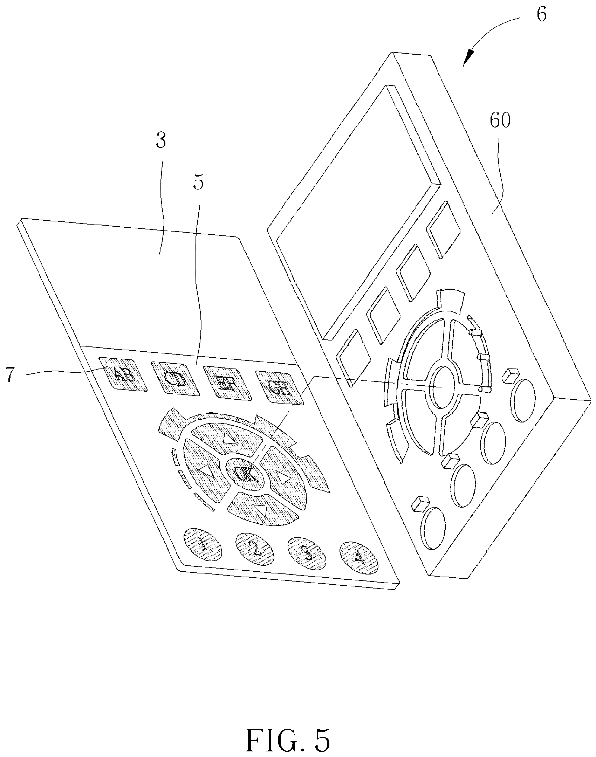

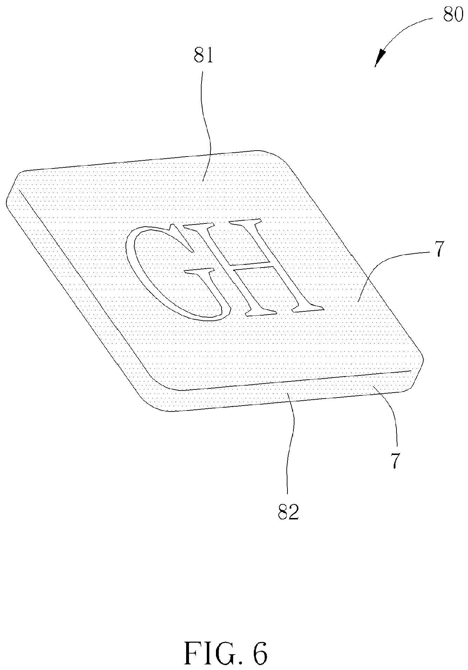

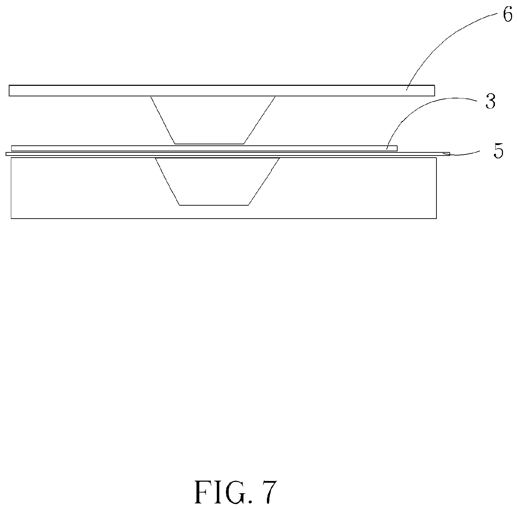

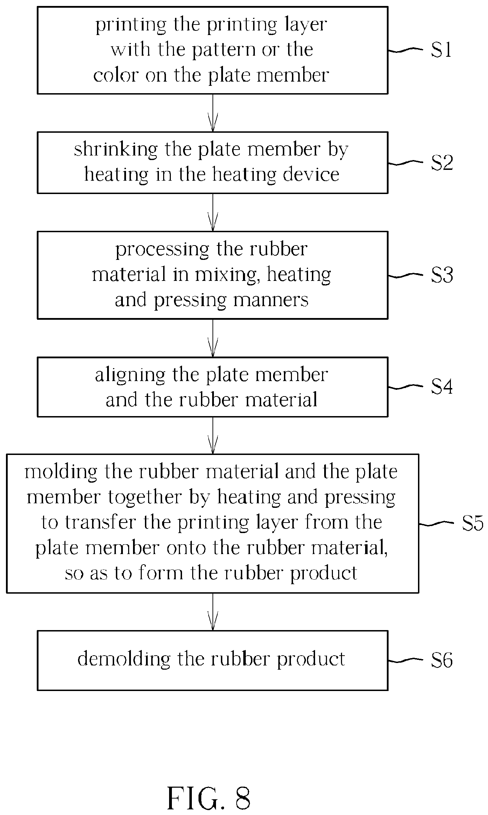

Please refer to FIG. 3 to FIG. 8. FIG. 3 is a schematic diagram of a rubber product 8 according to an embodiment of the present invention. FIG. 4 is an enlarged diagram of the rubber product 8 shown in FIG. 3 according to the embodiment of the present invention. FIG. 5 is a partial diagram of a rubber material 3, a plate member 5 and a mold 6 according to the embodiment of the present invention. FIG. 6 is a diagram of a button 80 of the rubber product 8 according to the embodiment of the present invention. FIG. 7 is a diagram of the rubber material 3 during a molding process according to the embodiment of the present invention. FIG. 8 is a flow chart diagram of a method for manufacturing the rubber product 8 according to the embodiment of the present invention. As shown in FIG. 8, in this embodiment, the method for manufacturing the rubber product 8 includes the following steps:
S1: printing a printing layer 7 with a pattern or a color on the plate member 5;
S2: shrinking the plate member 5 by heating in a heating device;
S3:processing the rubber material 3 in mixing, heating and pressing manners;
S4: aligning the plate member 5 and the rubber material 3;
S5: molding the rubber material 3 and the plate member 5 together by heating and pressing to transfer the printing layer 7 from the plate member 5 onto the rubber material 3, so as to form the rubber product 8; and
S6:demolding the rubber product 8.

More detailed description for the steps of the method is provided as follows. The rubber product 8 can be adapted to form buttons of an electronic device or an appliance, such as a remote control for a television. When it is desired to manufacture the rubber product 8, firstly the printing layer 7 with the pattern or the color can be printed on the plate member 5, as shown in FIG. 5 and FIG. 8 (step S1). Afterwards, the printed plate member 5 can be placed in the heating device, such as an oven, to shrink by heating, so as to prevent the plate member 5 from expanding and contracting caused by multiple printing processes (step S2). Furthermore, before the molding process, the rubber material 3 can be processed in mixing, heating and pressing manners (step S3). Afterwards, the rubber material 3 and the plate member 5 are aligned with each other and placed in the mold 6, so that the rubber material 3 and the plate member 5 can be molded together by heating and pressing to transfer the printing layer 7 from the plate member 5 onto the rubber material 3, so as to form the rubber product 8 (steps S4 and S5). It should be noticed that during the aforementioned process, the pattern or the color is printed to at least one three-dimensional surface of the rubber product 8 by transferring the printing layer 7 from the plate member 5 onto the rubber material 3.

After the rubber product 8 has been formed, the rubber product 8 can be demolded (step S5 and S6). In one embodiment, the plate member 5 can be detached from the rubber product 8 to emphasize aesthetic appearance when the rubber product 8 is demolded. However, it is not limited thereto. In another embodiment, when the rubber material 3 and the plate member 5 are molded together by heating and pressing to transfer the printing layer 7 from the plate member 5 onto the rubber material 3, the plate member 5 and the rubber material 3 are combined with each other, so as to form the rubber product 8. In other words, in this embodiment, the plate member 5 is a part of the rubber product 8. Therefore, it improves durability of the rubber product 8.

Furthermore, in another embodiment, when it is desired to print two opposite sides of the rubber material at a time, a first plate member and a second plate member can be utilized to clamp the two opposite sides of the rubber material during the molding process. The first plate member is printed with a first printing layer with a first pattern or a first color, and the second plate member is printed with a second printing layer with a second pattern or a second color. The rubber material, the first plate member and the second plate member are molded together by heating and pressing to transfer the first printing layer and the second printing layer onto the two opposite sides of the rubber material respectively, so as to form the rubber product.

In the present embodiment, the plate member 5 can be made of Polycarbonate, Thermoplastic polyurethane, or Polyethylene terephthalate. However, it is not limited thereto. The plate member 5 is hard and suitable for color printing which has better precision and quality. Therefore, as long as the plate member 5 and the rubber material 3 are aligned with each other, the printing layer 7 can be transferred onto the rubber material 3 correctly when being heated at about 100°C during the molding process. Furthermore, as shown in FIG. 4 and FIG. 6, since the plate member 5 and the rubber material 3 are molded together, not only a bottom surface 81 but also a lateral surface 82 adjacent to the bottom surface 81 of the button 80 of the rubber product 8 can be printed with the printing layer 7. When it applies the larger printing layer 7 for the rubber material 3, even two different horizontal surfaces of the rubber product 8 can be printed at a time. Therefore, compared to a conventional screen printing process, the present invention saves manufacturing time and cost.

In contrast to the prior art, the present invention utilizes the printing layer on the plate member for printing the pattern or the color onto at least one three-dimensional surface of the rubber product. The plate member can be selectively detached from the rubber product to emphasize aesthetic appearance or combined with the rubber product to improve the durability of the rubber product, such as to increase chemical resistance or wear resistance. Therefore, the present invention provides enhanced usability and manufacturability.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for manufacturing a rubber product (8), the method comprising:
printing a printing layer (7) with a pattern or a color on a plate member (5);
processing a rubber material (3) in mixing, heating and pressing manners;
molding the rubber material (3) and the plate member (5) together by heating and pressing to transfer the printing layer (7) from the plate member (5) onto the rubber material (3), so as to form the rubber product (8);
demolding the rubber product (8); and
detaching the plate member (5) from the rubber product (8) when demolding the rubber product (8);
wherein the pattern or the color is printed to at least one three-dimensional surface (81, 82) of the rubber product (8) by transferring the printing layer (7) from the plate member (5) onto the rubber material (3).

2. The method of claim 1, **characterized in that** the plate member (5) is made of Polycarbonate, Thermoplastic polyurethane, or Polyethylene terephthalate.

3. The method of claims 1 or 2, further **characterized by**:
shrinking the plate member (5) by heating in a heating device before molding the rubber material (3) and the plate member (5) together by heating and pressing to transfer the printing layer (7) from the plate member (5) onto the rubber material (3), so as to form the rubber product (8).

4. The method of claims 1, 2 or 3, **characterized in that** printing the printing layer (7) with the pattern or the color on the plate member (5) comprising:
printing a first printing layer with a first pattern or a first color on a first plate member; and
printing a second printing layer with a second pattern or a second color on a second plate member.

5. The method of claim 4, **characterized in that** molding the rubber material (3) and the plate member (5) together by heating and pressing to transfer the printing layer (7) from the plate member (5) onto the rubber material (3), so as to form the rubber product (8) comprising:
utilizing the first plate member and the second plate member to clamp two opposite sides of the rubber material (3); and
molding the rubber material (3), the first plate member and the second plate member together by heating and pressing to transfer the first printing layer and the second printing layer onto the two opposite sides of the rubber material (3) respectively, so as to form the rubber product (8).

6. A method for manufacturing a rubber product (8), the method comprising:
printing a printing layer (7) with a pattern or a color on a plate member (5);
processing a rubber material (3) in mixing, heating and pressing manners;
molding the rubber material (3) and the plate member (5) together by heating and pressing to transfer the printing layer (7) from the plate member (5) onto the rubber material (3) and to combine the plate member (5) with the rubber material (3), so as to form the rubber product (8); and
demolding the rubber product (8);
wherein the pattern or the color is printed to at least one three-dimensional surface (81, 82) of the rubber product (8) by transferring the printing layer (7) from the plate member (5) onto the rubber material (3).

7. The method of claim 6, **characterized in that** the plate member (5) is made of Polycarbonate, Thermoplastic polyurethane, or Polyethylene terephthalate.

8. The method of claims 6 or 7, further **characterized by**:
shrinking the plate member (5) by heating in a heating device before molding the rubber material (3) and the plate member (5) together by heating and pressing to transfer the printing layer (7) from the plate member (5) onto the rubber material (3) and to combine the plate member (5) with the rubber material (3), so as to form the rubber product (8).

9. The method of claims 6, 7 or 8, **characterized in that** printing the printing layer (7) with the pattern or the color on the plate member (5) comprising:
printing a first printing layer with a first pattern or a first color on a first plate member; and
printing a second printing layer with a second pattern or a second color on a second plate member.

10. The method of claim 9, **characterized in that** molding the rubber material (3) and the plate member (5) together by heating and pressing to transfer the printing layer (7) from the plate member (5) onto the rubber material (3) and to combine the plate member (5) with the rubber material (3), so as to form the rubber product (8) comprising:
utilizing the first plate member and the second plate member to clamp two opposite sides of the rubber material (3); and
molding the rubber material (3), the first plate member and the second plate member together by heating and pressing to transfer the first printing layer and the second printing layer onto the two opposite sides of the rubber material (3) respectively and to combine the first plate member and the second plate member with the rubber material (3), so as to form the rubber product (8).
